# EUROPEAN PATENT APPLICATION

(11) **EP 1 970 297 A1**
(43) Date of publication of application: **17.09.2008**
(21) Application number: 07005492.9
(22) Date of filing: 16.03.2007
(51) Int. Cl.: B62K 19/02

(54) **Bicycle frame and method of making the same**

(71) Applicant: BA&W International, Beitou , 114 Taipei (TW); FORTUNA ENTERPRISE srl, 40024 Castel S. Pietro Terme (IT)
(72) Inventor: Lee, Alfonso, Beitou District, 114 Taipei (TW); Fioravanti, Moreno, 40024 Castel S. Pietro Terme (IT)
(74) Representative: Kirschner, Klaus Dieter

(57) **Abstract**

Bicycle frame comprises tubular members making up a main frame having means for attaching a handlebar, means for attaching a saddle, means for supporting a bearing for a driving sprocket and support stays for supporting a rear wheel. The bicycle frame further comprises a basic frame structure out of aluminum alloy which basic frame structure is covered by a glass fiber or carbon fiber reinforced resin layer. A method of producing the bicycle frame comprises fixing glass fiber or carbon fiber reinforcement material to the basic frame structure out of aluminum alloy, providing a prepreg resin to the basic frame structure having glass fiber or carbon fiber reinforcement material fixed thereto; and curing the prepreg resin together with the glass fiber or carbon fiber reinforcement. Alternatively, glass fiber or carbon fiber reinforced prepreg material is fixed to the basic frame structure out of aluminum alloy; and the prepreg resin is cured together with the glass fiber or carbon fiber reinforced prepreg material.

## Description

The invention relates to a bicycle frame comprising tubular members making up a main frame having means for attaching a handlebar, means for attaching a saddle, means for attaching a bearing for a driving sprocket and support stays for supporting a rear wheel, and a method of making such a bicycle frame.

Historically, the tubular members of a bicycle frame have been made of steel. While steel is still used, frames can also be made from aluminum alloys, titanium, carbon fiber and even bamboo. Several properties of a material help decide whether it is an appropriate material for the construction of a bicycle frame. The density or specific gravity of the material is a measure of how light or heaving the material periodic volume is adding to the total weight of the bicycle. Stiffness or elastic modulus can in thory affect the ride comfort and power transmission efficiency. In practice, however, even a very flexible frame is much more stiff than the tires and the saddle, and, therefore, ride comfort is in the end more a factor of saddle choice, frame geometry, tire choice and bicycle fit. The yield strength determines how much force is needed to permanently deform the material, and this characteristic is important for crash-worthiness. The elongation characteristic determines how much deformity the material allows before cracking which is also important for crash-worthiness. The fatigue limit and endurance limit determines the durability of the frame when subjected to bicycle stress from pedaling or right bumps. Tube engineering and frame geometry has been considered to overcome much of the perceived shortcoming of these particular materials.

As concerns aluminum alloys, they have lower density and lower strength compared with steel alloys. Aluminum alloys can, however, be used to build a frame that is lighter than steel. Furthermore, aluminum alloy has no substantial fatigue endurance limit; even the smallest repeated stresses will eventually cause failure if repeated enough times. However, alloy technology, good mechanical design and good construction practices help to extend the fatigue life of bicycle frames out of aluminum alloy to acceptable lengths. In advanced bicycle frames, so called butted aluminum tubes, where the wall thickness of the middle sections of the tube are made to be thinner than the end sections, are used for weight savings. Other attempts to improve the properties of aluminum alloy bicycle frames include the shaping of the cross section of the tubes such as in an oval or tear drop shapes, for optimizing stiffness and compliance in different directions as well as reducing wind resistance.

Furthermore, a composite material comprising carbon fibers in a matrix of resin has been used as a non-metallic material for bicycle frames. Although expensive, it is light-weight, corrosion resistant and strong, and can be formed into almost any shape desired. The result is a frame that can be fine-tuned for specific strength when it is needed, while allowing flexibility in other frame sections for comfort. Custom carbon fiber bicycle frames may even be designed with individual tubes that are strong in one direction, such as laterally, while complained in another direction, such as vertically. The ability to design an individual composite tube with properties that vary by orientation can not be accomplished with any metal frame construction. While the composite materials provide light weight as well as high strength, they have much lower impact resistance and consequently are prone to damage if crashed or mishandled.

It is apparent from the above, that extensive research and development efforts have been made in order to provide a bicycle frame which is, on the one hand, light weight and, on the other hand, has the desired mechanical properties mentioned above.

For achieving the above object, bicycle frame comprising tubular members making up a main frame having means for attaching a handlebar, means for attaching a saddle, means for supporting a bearing for a driving sprocket and support stays for supporting a rear wheel, comprises a basic frame structure out of aluminum alloy which basic frame structure is covered by a glass fiber or carbon fiber reinforced resin layer. The bicycle frame of the invention serves the above object because the best quality of a weight reduced aluminum frame with the stiffness and resistance of the carbon layer provide the desired properties. Furthermore, the production of a bicycle frame according to the invention is much less cumbersome because the aluminum alloy basic frame structure is used to support the glass fiber or carbon fiber reinforcement material during assembly and curing together with the re-enforced resin layer. In other words, putting together a bicycle frame only consisting essentially of carbon matrix material, is much more cumbersome because numerous layers and method step have to be taken in order to get to the desired shape of the bicycle frame. By combining the aluminum alloy basic frame structure with the glass fiber or carbon fiber reinforced resin layer, it is possible to reduce the frame weight by 30% from a common used triple butted aluminum frame, and, thanks to the combination of the invention, the rigidity of the frame can still be increased by 50%, and its resistance against shocks and breaking is increased by at least 100%.

According to a preferred embodiment of the invention, the tubular members of the main frame comprise triple butted aluminum alloy tubes covered by the glass fiber or carbon fiber reinforced resin layer. Using butted aluminum alloy tubes covered by the glass fiber or carbon fiber reinforced resin layer takes advantage of the reduced weight of the butted aluminum tubes as compared to non-butted aluminum tubes.The aluminum alloy tubes can be butted to an even greater extend because any loss of mechanical stability can be compensated easily by the glass fiber or glass fiber reinforced resin layer.

According to a preferred embodiment of the invention, the aluminum alloy comprises a 6061 or 7005 aluminum alloy. Among the numerous aluminum alloys on the market, it has been found that these aluminum alloys 6061 or 7005 are in particularly suited for the basic frame structure according to the invention because they show the required mechanical characteristics and lend themselves to a good adhesion of the resin layer to the aluminum alloy tubes.

According to a preferred embodiment of the invention, the glass fibers comprise weights (counts) of 200 to 800 tex. Among the numerous glass fibers which can be used as reinforcements of a reinforced resin layer, glass fibers in this tex-range are particularly suited as they show, on the one hand, the desired reinforcement properties and, on the other hand, are easily applied to the structural components of the bicycle frame

According to a preferred embodiment of the invention, the glass fiber reinforcement comprises woven glass fiber fabric. The woven fabric version of the glass fiber reinforcement adds additional stability during the manufacturing of the bicycle frame and also during later use.

According to a preferred embodiment of the invention, the carbon fibers comprise one of 3K and 6K and 9K and 12K carbon fibers. This range of carbon fibers has been proven to result in the desired mechanical and operation characteristics, and they are also easily to integrate into the manufacturing process.

According to a preferred embodiment of the invention, the carbon fiber reinforcement comprises woven carbon fiber fabric. As with the glass fiber reinforcement, also the woven fabric version of carbon fibers adds to the mechanical strength and easiness of manufacture.

According to a preferred embodiment of the invention,the resin layer is comprises an epoxy resin, preferably having a cure temperature of 125°C to 180°C, preferably 150°C . Also epoxy resins with different cure temperatures may be used, this kind of epoxy resin is preferred in view of energy saving and smoothness of the manufacturing process. In particular the low cure temperature ensures a curing process that does not produce any cracks and effects.

According to a preferred embodiment of the invention, the finished frame is covered by a lacquer layer for protecting the prepreg material and for decorative purposes.

According to a preferred embodiment of the invention, a method of producing a bicycle frame comprises fixing glass fiber or carbon fiber reinforcement material to the basic frame structure out of aluminum alloy, providing a prepreg resin to the basic frame structure having glass fiber or carbon fiber reinforcement material fixed thereto; and curing the prepreg resin together with the glass fiber or carbon fiber reinforcement. The advantageous aspect of the production method is the fact that the reinforcement material can be fixed to the basic frame structure out of aluminum alloy to form a semi fabricated product which can easily be cured.

According to a preferred embodiment of the method of the invention, the fixing of the glass fiber or carbon fiber reinforcement material to the basic frame structure comprises using an adhesive material designed to bond fibrous material to the basic frame structure of aluminum alloy.

According to a preferred embodiment of the invention, a method of producing a bicycle frame comprises fixing glass fiber or carbon fiber reinforced prepreg material to the basic frame structure; and curing the prepreg resin together with the glass fiber or carbon fiber reinforced prepreg material. This facilitated the production process as the prepreg resin is already combined with the fiber material so that the prepreg resin has not to be provided separately from the fiber material.

According to a preferred embodiment of the method of the invention, the fixing of the glass fiber or carbon fiber reinforced prepreg to the basic frame structure comprises using an adhesive material designed to bond the reinforced prepreg material to the basic frame structure of aluminum alloy. Such adhesive materials are on the market from various manufactures, among others Minnesota Mining and Manufacturing Company, St. Paul, Minnesota, United States.

According to a preferred embodiment of the method of the invention, the curing is carried out in a moulding tool or in an autoclave. The moulding tool which applies the required heat energy to the semi product bicycle frame to be cured may be in one peace or may be applied successively to sections of the semi product bicycle frame to be cured. It is easy to provide tool at low cost. On the other hand, an autoclave has the advantage that the curing procedure can be shortened.

According to a preferred embodiment of the method of the invention, the curing is carried out at 125 °C to 180°C, preferably at 150°C for 30 min. It has been found that such a gentle curing of the bicycle frame is advantages in view of avoiding cracks and defects.

According to a preferred embodiment of the invention, the method further comprises trimming and polishing the bicycle frame after removal from the moulding tool or the autoclave. Trimming and polishing of the final bicycle frame adds to the appearance and also to safety during use as there are no edges or cracks which could cause injuries to the drivers.

According to a preferred embodiment of the method of the invention, the finished frame is covered by a lacquer layer which is curable at 60°C.

Embodiments of the invention are now described with reference to the drawings in which:
- Fig. 1: shows a general design of a bicycle frame; and
- Fig. 2: a section of a tubular member for building the bicycle frame.

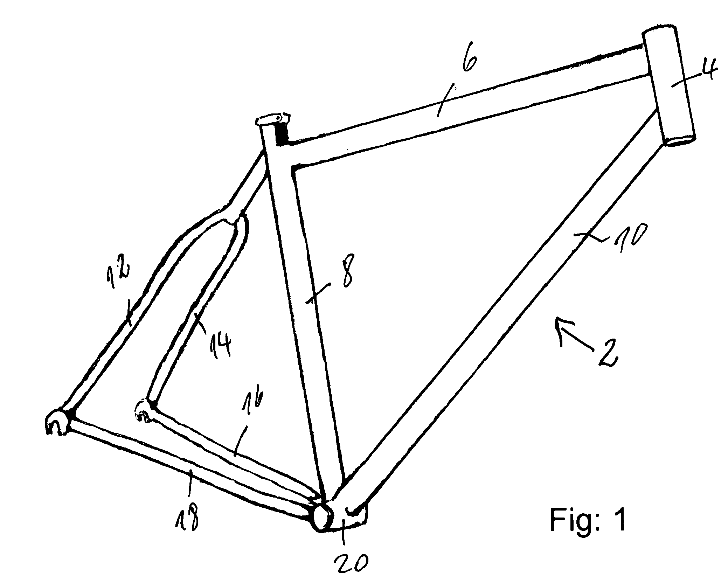

Fig. 1 shows the general outline of a bicycle frame 2, a so called diamond frame. The bicycle frame 2 consists of a head tube 4, a top tube 6, a seat tube 8, a down tube 10, seat stays and chain stays 16, 18. The head tube supports a handlebar (not shown) whereas the saddle tube supports a saddle (not shown) and the saddle stays 12, 14 and the chain stays 16, 18 are for supporting a rear wheel (not shown). At the joining point of the saddle tube 8 and the down tube 10, a transverse tube member 20 is provided for supporting a bearing for a driving sprocket (not shown).

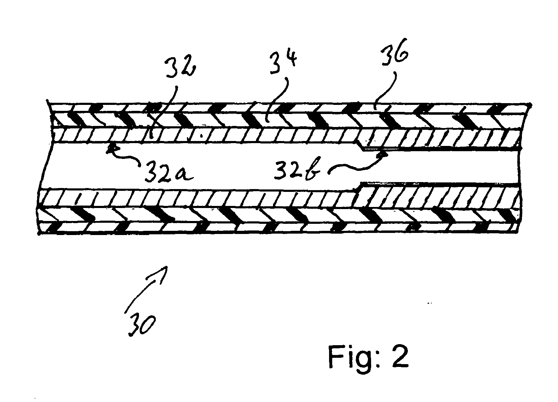

All the tubular members and the stay members as well as the transverse tubular member 20 have an inner lining out of aluminum alloy which lining forms a basic frame structure out of aluminum alloy. As shown in Fig. 2, a portion of a tubular member 30 consists out of an aluminum alloy tube 32, a glass fiber or carbon fiber layer 34 and a reinforcement resin layer 36. It is to be noted that the fiber glass or carbon fiber layer of the woven fabric type is embedded in the resin layer 36 rather being separate there from. As a result of the butting process, the aluminum tube 32 has, in Fig. 2, a section 32a of thinner wall thickness 32a and a section 32b of thicker wall thickness.

In preferred embodiments of the invention, aluminum alloys 6061 consisting or 7005 according to D.IN EN 573.3. Furthermore, glass fibers comprising weights of 200 to 800 tex, carbon fibers in the range of 3K, 6K, 9K and 12K, and the epoxy resin having a curing temperature of 125°C to 180°C, preferably 150°C, are used in preferred embodiments of the invention. In the most preferred embodiment, the glass fiber reinforcement or carbon fiber enforcement layer 34 is in the form of a woven fabric out of the fibers mentioned.

The bicycle frame of the invention can be used for any type of bicycle, and, among others, also for mountain bikes. As mountain bikes are subject to large forces in operation, a frame for a mountain bike must have corresponding characteristics. In order to show the superior quality of the bicycle frame of the invention, tests where performed on a mountain bicycle frame comprising an aluminum alloy basic frame structure and a woven carbon fiber fabric reinforcement in an epoxy resin layer. The results of the tests show the superior properties of the bicycle frame of the present invention.

The frame had a mass of 1568 g. A fatigue test was carried out on this frame where the principle of the test consists of subjecting the mountain bike frame to a force applied on pedals simulating the action of pedaling. The mountain bike frame was placed in position with its rear wheel not free to rotate. A force was applied alternatively to the right and left pedal axle and 65 mm from the external side of the crank arm at 45°. Under these requirements, a fatigue test with pedaling forces was carried out according to the standard DIN EN 14766, § 4.8.4.3 wherein 100.000 cycles under 12.000 N were performed alternatively on the spin of the pedals with a test frequency of 2Hz. After this test had been completed, it was found that the requirements of DIN EN 14766, § 4.8.4.3 were fulfilled.

Furthermore another fatigue test was carried out on the above mountain bike frame, where the principle of these tests consisted in subjecting the mountain bike frame to a force applied to the front fog. The front fog was placed in position, fitted on the rear drop end, and a force was applied on the axle of the front wheel. The force was applied alternatively to the front axle, perpendicular to the head tube. A fatigue test with horizontal forces was carried out according to DIN EN 14766, § 4.8.5.3 wherein 50.000 cycles were carried out under +1.200 N/-600 N alternatively applied to the axle of the front wheel at a test frequency of 5 Hz. As a result, it was confirmed after completion of the test, that the requirements of DIN EN 14766, § 4.8.5.3 were fulfilled.

In order to produce the bicycle frame according to the invention, glass fiber or carbon fiber reinforcement material is fixed to the basic frame structure out of aluminum alloy. To this end, an adhesive material designed to bond fibrous material to the basic frame structure of aluminum alloy is used. After fixing the glass fiber or carbon fiber reinforcement material to the basic frame structure, a prepreg resin is provided to the thus prepared semi product basic frame structure having glass fiber or carbon fiber reinforcement material fixed thereto, and, thereafter, the prepreg resin together with the glass fiber or carbon fiber reinforcement is cured.

In order to produce the bicycle frame in an alternative method of the invention, glass fiber or carbon fiber reinforced prepreg material is fixed to the basic frame structure out of aluminum alloy. To this end, an adhesive material designed to bond the prepreg material to the basic frame structure of aluminum alloy is used. After fixing the prepreg material to the basic frame structure, the thus prepared semi product basic frame structure having prepreg material fixed thereto is cured.

In both methods the curing is carried out in a moulding tool or in an autoclave, wherein the curing is carried out at 125°C to 180°C, preferably 150°C, for 30 min. After curing and removal from the moulding tool or the autoclave, the bicycle frame is trimmed and polished.

## Claims

1. Bicycle frame comprising tubular members making up a main frame having means for attaching a handlebar, means for attaching a saddle, means for supporting a bearing for a driving sprocket and support stays for supporting a rear wheel, wherein the bicycle frame comprises a basic frame structure out of aluminum alloy which basic frame structure is covered by a glass fiber or carbon fiber reinforced resin layer.

2. The bicycle frame of claim 1, wherein the tubular members of the main frame comprise triple butted aluminum tubes covered by the glass fiber or carbon fiber reinforced resin layer.

3. The bicycle frame of claim 1, wherein the aluminum alloy comprises an 6061 or 7005 aluminum alloy.

4. The bicycle frame of claim 1, wherein the glass fibers comprise weights (counts) of 200 to 800 tex.

5. The bicycle frame of claim 4, wherein the glass fiber reinforcement comprises woven glass fiber fabric.

6. The bicycle frame of claim 1, wherein the carbon fibers comprise one of 3K and 6K and 9K and 12K carbon fibers.

7. The bicycle frame of claim 6, wherein the carbon fiber reinforcement comprises woven carbon fiber fabric.

8. The bicycle frame of claim 1, wherein the resin layer is comprises an epoxy resin, preferably having a cure temperature of 125°C to 180°C, preferably 150°C.

9. The bicycle frame of claim 1, wherein the finished frame is covered by a lacquer layer.

10. A method of producing a bicycle frame of claim 1, comprising:
fixing glass fiber or carbon fiber reinforcement material to the basic frame structure out of aluminum alloy,
providing a prepreg resin to the basic frame structure having glass fiber or carbon fiber reinforcement material fixed thereto; and curing the prepreg resin together with the glass fiber or carbon fiber reinforcement.

11. The method of claim 10, wherein the fixing of the glass fiber or carbon fiber reinforcement material to the basic frame structure comprises using an adhesive material designed to bond fibrous material to the basic frame structure of aluminum alloy..

12. A method of producing a bicycle frame of claim 1, comprising:
fixing glass fiber or carbon fiber reinforced prepreg material to the basic frame structure out of aluminum alloy; and
curing the prepreg resin together with the glass fiber or carbon fiber reinforced prepreg material.

13. The method of claim 12, wherein the fixing of the glass fiber or carbon fiber reinforced prepreg to the basic frame structure comprises using an adhesive material designed to bond the reinforced prepreg material to the basic frame structure of aluminum alloy.

14. The method of any of the claims 10 to 13, wherein the curing is carried out in a moulding tool or in an autoclave.

15. The method of claim 10, 12 or 14, wherein the curing is carried out at 125°C to 180°C, preferably 150°C, for 30 min.

16. The method of claim 14, further comprising trimming and polishing the bicycle frame after removal from the moulding tool or the autoclave.

17. The method of claim 10 or 12, wherein the finished frame is covered by a lacquer layer which is curable at 60°C.
